# FASCICULE DE BREVET EUROPEEN

(11) **EP 0 330 071 B1**
(45) Date de publication et mention de la délivrance du brevet: **28.04.1993**
(21) Numéro de dépôt: 89102639.5
(22) Date de dépôt: 16.02.1989
(51) Int. Cl.: G07C 9/00, G07B 15/02

(54) **Système de péage pour utilisateurs de moyens de transport**
Fahrgeldbezahlsystem für Benutzer von Verkehrsmitteln
Fare-paying system for transport users

(30) Priorité: 22.02.1988 FR 8802084
(43) Date de publication de la demande: 30.08.1989
(73) Titulaire: COMPAGNIE GENERALE D'AUTOMATISME CGA-HBS, F-75008 Paris (FR)
(72) Inventeur: Lefèvre, Jean Patrick, F-91120 Palaiseau (FR)
(74) Mandataire: Weinmiller, Jürgen

(56) Documents cités:
- EP-A- 0 057 602
- EP-A- 0 061 373
- EP-A- 0 198 642
- WO-A-88/03295
- GB-A- 2 142 178
- GB-A- 2 191 029
- US-A- 4 001 822
- PATENT ABSTRACTS OF JAPAN, vol. 7, no. 67 (P-184)[1212], 19 mars 1983, page 152 P 184;& JP-A-57 211 679

## Description

La présente invention concerne un système de péage pour utilisateurs de moyens de transport.

On connaît des systèmes utilisant des cartes à décomptes, par exemple une carte magnétique dont les moyens de transfert de données sont des pistes magnétiques introduites dans des têtes de lecture/écriture d'un poste fixe, ou une carte à mémoire dont les moyens de transfert sont des contacts électriques faisant connexion par pression dans des têtes de lecture d'un poste fixe de traitement.

Ces cartes doivent être introduites dans un poste fixe de traitement pour être reliées à des éléments internes de ce poste fixe au moyen de contacts mécaniques qui engendrent des problèmes de fiabilité dans la mesure où ces contacts peuvent s'oxyder, se salir ou se détériorer.

En outre, un tel système constitue un frein au flux des usagers.

On connaît par le document EP-A-0 061 373 un système de contrôle pour le passage à des endroits soumis à péage. Il comprend un objet portatif individuel comportant des moyens électroniques avec mémoires et des moyens d'émission-réception acoustiques en ultra-sons, et un terminal de contrôle d'accès comportant également des moyens d'émission-réception à ultra-sons. Cependant un tel système n'est pas un système de péage pour moyen de transport permettant de débiter le titre de transport individuel pendant le transport en fonction du trajet parcouru.

Le document GB-A-2 191 029 décrit une carte électronique pouvant être utilisée notamment comme moyen de paiement à décompte pour des moyens de transport en association avec un équipement séparé de lecture et d'écriture. Le système décrit ne permet pas non plus le débit en fonction du trajet pendant le transport, et la carte doit être insérée dans un lecteur.

La présente invention a pour but de pallier ces inconvénients et a pour objet un système de péage pour usagers de moyens de transport, comprenant pour chaque usager un titre de transport contenant un organe de traitement d'informations avec mémoire et des moyens d'émission-réception, caractérisé en ce que chaque cellule de transport comporte un équipement d'émission-réception, un micro-ordinateur et, au passage d'entrée des usagers, une borne d'entrée comprenant des moyens d'émission-réception, en ce que le micro-ordinateur est relié audit équipement d'émission-réception et à ladite borne d'entrée, et en ce que les échanges d'information entre d'une part le titre de transport et d'autre part l'équipement d'émission-réception et la borne d'entrée, sont effectués par transmission radio-électrique, l'équipement d'émission-réception permettant une liaison simultanée avec l'ensemble des titres de transport présents dans la cellule de transport.

Avantageusement, lesdites transmissions sont réalisées en hyperfréquences.

L'invention va maintenant être décrite en se référant au dessin annexé dans lequel :
La figure 1 est un schéma synoptique représentant une cellule de transport.
La figure 2 représente schématiquement un titre de transport.
La figure 3 représente schématiquement un équipement d'émission-réception ou une borne d'entrée.

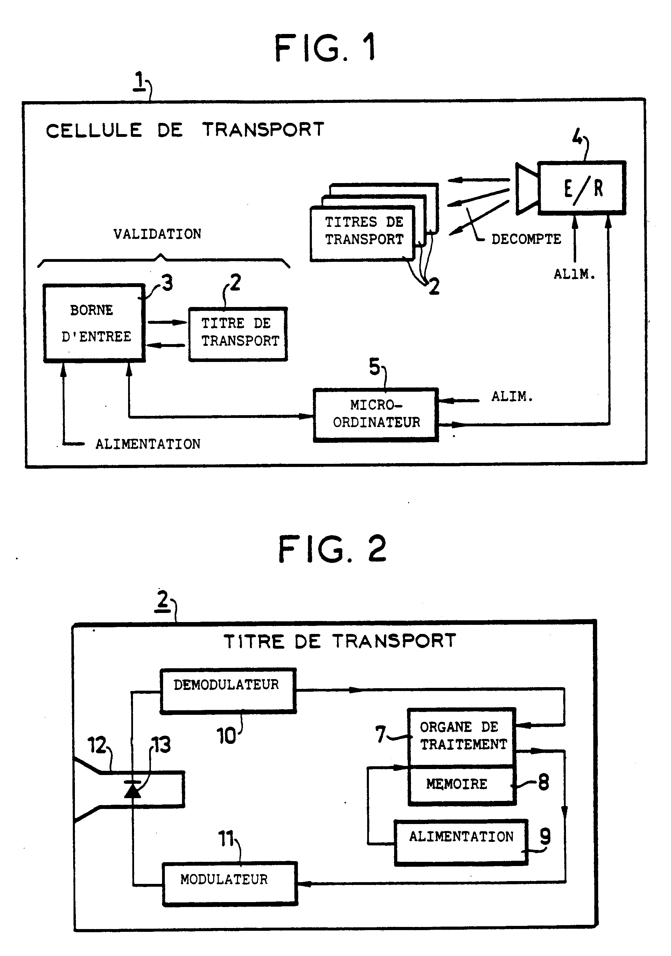

En se référant à la figure 1, on a représenté par un rectangle 1 une cellule de transport. Les usagers possèdent chacun un titre de transport 2 qu'ils ont acquis à un bureau d'émission où le titre est crédité d'un certain nombre d'unités de transport contre le paiement d'une somme correspondante.

La cellule de transport est équipée d'une borne d'entrée 3, d'un équipement d'émission-réception 4 et d'un micro-ordinateur 5.

La borne d'entrée 3 et l'équipement d'émission-réception 4 sont chacun reliés au micro-ordinateur 5.

Les échanges d'information entre les titre de transport 2 et la borne d'entrée 3, de même qu'entre les titres de transport 2 et l'équipement d'émission-réception 4 sont effectués par transmission radio-électrique sans aucune liaison matérielle.

La transmission est réalisée en hyperfréquence, ce qui permet de considérer le titre de transport 2 non plus comme un émetteur-récepteur, mais comme un transpondeur utilisant l'énergie d'émission de l'émetteur-récepteur 6 (figure 2) de la borne d'entrée 3, pour assurer la réponse à une interrogation.

Le titre de transport 2, représenté schématiquement figure 2, est par exemple constitué par une carte d'un format correspondant aux cartes bancaires, mais en plus épais. Il comporte un organe de traitement des informations 7, une mémoire 8 avec une alimentation 9 constituée par exemple par une pile au lithium. Elle comprend en outre un démodulateur 10, un modulateur 11, un cornet 12 de réception et des moyens de détection 13 comprenant essentiellement une diode prenant en compte la modulation du signal émis, la fréquence porteuse, à 9,9 GHz par exemple, étant accordée avec le cornet.

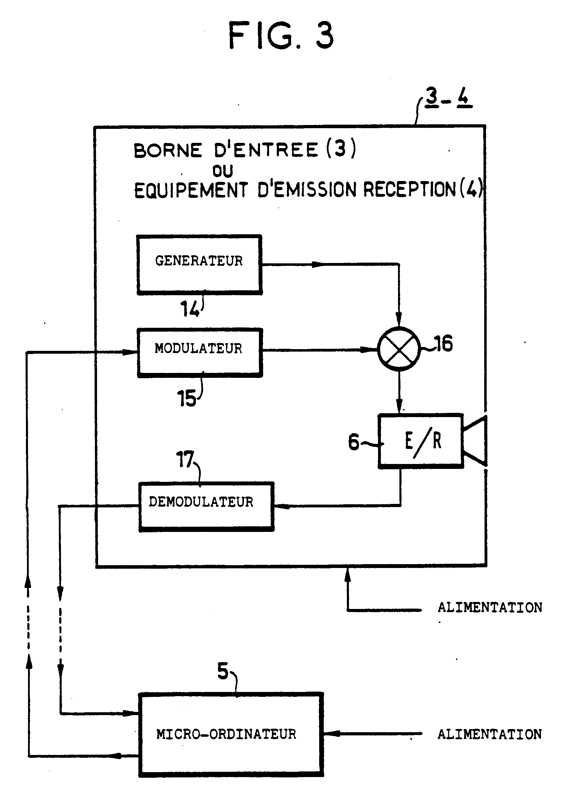

La borne d'entrée 3, représentée schématiquement figure 3, comprend un générateur 14 d'hyperfréquence, à 9,9 GHz par exemple, un modulateur 15, un organe sommateur 16 recevant les signaux en sortie du modulateur et du générateur. L'organe sommateur 16 a sa sortie reliée à l'entrée de l'émetteur-récepteur 6, dont la sortie est reliée à un démodulateur 17. Le modulateur 15 et le démodulateur 17 sont reliés au micro-ordinateur 5 de la cellule de transport 1. L'émetteur-récepteur 6 est de faible puissance : de l'ordre de 10 mW et de portée limitée à 1 m. Cette borne d'entrée 3 assure un dialogue bi-directionnel à l'alternat avec le titre de transport 2 porté par l'usager, lors de son entrée dans la cellule de transport 1.

L'équipement 'émission-réception 4 a une constitution identique à celle de la borne d'entrée 3 et est donc également représentée figure 3. Cependant, ici, l'émetteur-récepteur 6 est de forte puissance, de l'ordre de 200 mW et d'une portée de l'ordre de 20 m permettant une liaison avec l'ensemble des titres de transport 2 présents dans l'enceinte du véhicule 1. Comme pour la borne d'entrée, le modulateur 15 et le démodulateur 17 de l'équipement d'émission-réception 4 sont reliés au micro-ordinateur 5. Le rôle de cet équipement d'émission-réception 4 est d'assurer, entre deux stations, le décompte automatique et simultané, par transmission en hyperfréquence, d'un nombre d'unité de transport donné, de tous les titres de transport présents dans le véhicule, et également de transmettre à ces titres de transport une information correspondant au point de sortie, éventuellement daté, de la prochaine station d'arrêt. Outre cette fonction de base, cet équipement 4 établit une liaison bi-directionnelle avec des équipements à poste fixe au sol, non représentés, afin de se mettre en liaison avec un réseau informatique du transporteur ou échanger des informations locales, point d'interstation ou d'interzone par exemple.

Le micro-ordinateur 5 de la cellule de transport 1 génère et gère les messages échangés par la borne d'entrée 3 et l'équipement 4, avec les titres de transport 2.

La borne d'entrée 3, l'équipement d'émission-réception 4 et le micro-ordinateur 5 ont des alimentations dont l'énergie primaire provient de l'énergie disponible à bord de la cellule de transport 1.

Lorsqu'un usager se présente à l'entrée du véhicule de transport, son titre de transport est activé au moment de son passage devant la borne d'entrée 3 et, en réponse, il transmet le point d'entrée, daté, et le point de sortie, daté, de son précédent voyage, ainsi que le nombre d'unités de transport restantes. Si ce nombre est positif, le voyage est validé et un nouveau point d'entrée, daté, est enregistré dans la mémoire du titre de transport.

Au cours du voyage, entre deux stations, le micro-ordinateur 5 donne à l'équipement 4 un ordre d'émission d'un signal correspondant au point de sortie du prochain arrêt qui s'enregistre sur la mémoire de chaque titre de transport, ainsi que d'émission d'un signal correspondant au nombre d'unités de transport pour la section en cours. Les titres de transport effectuent alors la soustraction entre le nombre d'unités de transport en crédit dans chaque titre et ledit nombre d'unités correspondant à ladite section.

Bien entendu, afin d'éviter la fraude, la borne d'entrée 3 est associée à un détecteur de passage d'un type quelconque connu accouplé à ladite borne de façon à ce qu'un signal sonore, ou autre, soit émis si au bout d'un temps prédéterminé, après qu'un signal de détection de passage ait été émis, aucune réponse n'arrive à ladite borne.

## Revendications

1. Système de péage pour usagers de moyens de transport, comprenant pour chaque usager un titre de transport (2) contenant un organe de traitement d'informations (7) avec mémoire (8) et des moyens d'émission-réception (10 à 13), caractérisé en ce que chaque cellule de transport (1) comporte un équipement d'émission-réception (4), un micro-ordinateur (5) et, au passage d'entrée des usagers, une borne d'entrée (3) comprenant des moyens d'émission-réception, en ce que le micro-ordinateur (5) est relié audit équipement d'émission-réception (4) et à ladite borne d'entrée (3), et en ce que les échanges d'informations entre, d'une part le titre de transport (2), et d'autre part l'équipement d'émission-réception (4) et la borne d'entrée (3), sont effectués par transmission radio-électrique, l'équipement d'émission-réception (4) permettant une liaison simultanée avec l'ensemble des titres de transport présents dans la cellule de transport (1).

2. Système de péage selon la revendication 1, caractérisé en ce que lesdites transmissions sont réalisées en hyperfréquence.

3. Procédé d'utilisation d'un système de péage selon l'une des revendications 1 ou 2, caractérisé en ce que lors de l'entrée d'un usager dans un véhicule de transport (1), ledit titre de transport (2) est activé par ladite borne d'entrée (3) et transmet des informations relatives à son crédit restant d'unités de transport, ainsi qu'à la date, le point d'entrée et le point de sortie de son voyage précédent, et en ce qu'au cours du voyage, entre deux stations, ledit équipement d'émission-réception (4) émet un signal de débit d'un nombre d'unités de transport déterminé que chaque titre de transport contenu dans le véhicule défalque de son crédit, ledit équipement (4) émettant également un signal correspondant au point du prochain arrêt, cette information s'inscrivant dans la mémoire des titres de transport.

## Claims

1. A payment system for the users of transport means, the system comprising for each user a ticket (2) containing a data processing member (7) with a memory (8) and transmitter/receiver means (10 to 13), characterized in that each transport cell (1) includes a transmitter/receiver equipment (4), a microcomputer (5), and a boarding terminal (3) including transmitter/receiver means located on the user boarding passage, in that the microcomputer (5) is connected to said transmitter/receiver equipment (4) and to said boarding terminal (3), and in that information is interchanged between the ticket (2) and both the transmitter/receiver equipment (4) and the boarding terminal (3) by means of radio transmission, the transmitter/receiver equipment (4) allowing simultaneous connection with all the tickets present in the transport cell (1).

2. A payment system according to claim 1, characterized in that said transmission is performed at microwave frequencies.

3. A method of using a payment system according to claim 1 or 2, characterized in that when a user boards a transport vehicle (1), said ticket (2) is activated by said boarding terminal (3) and transmits information relating to its remaining credit in transport units, together with the date, the boarding point, and the exit point of its previous journey, and in that during a journey, between two stops, said transmitter/receiver equipment (4) emits a debit signal concerning a given number of transport units, which number is debited from its own credit by each ticket contained in the vehicle, said equipment (4) also emitting a signal corresponding to the next stop point, which information is written in the memory of each of the tickets.

## Patentansprüche

1. Zahlsystem für die Benutzung eines Transportmittels mit einem Fahrausweis (2) für jeden Benutzer, wobei der Fahrausweis ein Datenverarbeitungsorgan (7) mit Speicher (8) und Sende-Empfangsmitteln (10 bis 13) enthält, dadurch gekennzeichnet, daß jede Transportzelle (1) eine Sende-Empfangseinrichtung (4), einen Mikrorechner (5) und beim Fahrgasteingang ein Eingangsterminal (3) mit Sende-Empfangsmitteln enthält, daß der Mikrorechner (5) mit der Sende-Empfangseinrichtung (4) und dem Eingangsterminal (3) verbunden ist und daß die Informationsaustauschvorgänge zwischen einerseits dem Fahrausweis (2) und andererseits der Sende-Empfangseinrichtung (4) und dem Eingangsterminal (3) durch drahtlose Übertragung erfolgen, wobei die Sende-Empfangseinrichtung (4) eine gleichzeitige Verbindung mit allen in der Transportzelle (1) vorhandenen Fahrausweisen erlaubt.

2. Zahlsystem nach Anspruch 1, dadurch gekennzeichnet, daß die Übertragungen im Mikrowellenbereich erfolgen.

3. Verfahren zur Verwendung eines Zahlsystems nach einem er Ansprüche 1 und 2, dadurch gekennzeichnet, daß beim Eintritt eines Fahrgasts in ein Transportfahrzeug (1) der Fahrausweis (2) vom Eingangsterminal (3) aktiviert wird und Informationen bezüglich des verbleibenden Guthabens an Transporteinheiten sowie bezüglich des Datums, des Zusteigepunkts und des Ausstiegspunkts der vorhergehenden Reise überträgt und daß während der Fahrt zwischen zwei Haltestellen die Sende-Empfangseinrichtung (4) ein Belastungssignal bezüglich einer bestimmten Anzahl von Transporteinheiten aussendet, die jeder Fahrausweis im Fahrzeug von seinem Guthaben abzieht, wobei diese Einrichtung (4) auch ein Signal bezüglich der nächsten Haltestelle aussendet und diese Information in den Speicher des Fahrausweises eingetragen wird.
